# EUROPEAN PATENT APPLICATION

(11) **EP 1 724 179 A1**
(43) Date of publication of application: **22.11.2006**
(21) Application number: 06113811.1
(22) Date of filing: 11.05.2006
(51) Int. Cl.: B62D 1/18

(54) **Steering Column**

(30) Priority: 18.05.2005 US 131700
(71) Applicant: Deere & Company, Moline, IL 61265-8098 (US)
(72) Inventor: Hayden, Stephen, Madison, WI 53705 (US)
(74) Representative: Löser, Iris

(57) **Abstract**

A steering column (100) for a lawn and garden tractor or off-road vehicle includes an upper shaft (102, 202) with one end attached to a steering wheel (103) and the second end having a polygonal socket (110, 210), and a lower shaft (101, 201) that is non-parallel to the upper shaft (101, 201), with a first end connected to a steering control box (114), and a second end having a polygonal head (106, 206) inserted into the socket (110, 210) to impart torque between the upper and lower shafts (101, 201, 102, 202). The polygonal head (106, 206) has sides (108, 208) with curved profiles to allow misalignment between the upper and lower shafts (101, 201, 102, 202).

## Description

This invention relates generally to steering columns for lawn and garden tractors or other off-road vehicles, and particularly to a flexible steering shaft for a lawn and garden tractor or other off-road vehicle.

Steering wheels for lawn and garden tractors or other off-road vehicles may be connected by one or more serially arranged steering shafts from a steering wheel down to a steering control box which may be connected via linkages to a pair of steerable wheels. On many such tractors, the vehicle specifications, and the packaging of other mechanical components, may require the rotational axis of the steering wheel to be misaligned or non-parallel with the rotational axis of the input shaft on the steering control box. For example, the misalignment may be necessary due to the mounting location of the steering wheel and/or steering control box, or may exist because the vehicle has a tilt steering wheel.

Steering shafts in these tractors also have been designed to transfer torque and flex, as well as accommodating some misalignment between the two rotational axes. For example, universal joints have been used to provide links between the upper and lower portions of steering shafts. Alternatively, flexible wound wire cores have been used to flexibly connect the upper and lower portions of steering shafts. A lower cost alternative is needed to transfer torque and accommodate misalignment between two different rotational axes in a steering shaft.

The object to be met with the invention is to comply with this need.

This object is met according to the invention by the teaching of claims 1 or 10 respectively, while features developing the solution in an advantageous manner are set forth in the further claims.

A steering column is provided for a lawn and garden tractor or other off-road vehicle, that transfers torque and accommodates misalignment between two different rotational axes. The two axes are defined by an upper shaft and a lower shaft. The connection between the upper and lower shafts includes a multi-sided socket and a multi-sided head having sides with curved profiles to allow the misalignment of the two axes.

Two embodiments of the invention described below are shown in the drawings, in which:
- Fig. 1: is a perspective view of a flexible steering shaft according to one embodiment of the invention.
- Fig. 2: is a perspective view of the upper part of the flexible steering shaft shown in Fig. 1.
- Fig. 3: is a side view, with the upper part in section, of a flexible steering shaft according to the first embodiment.
- Fig. 4: is a perspective view of the lower portion of a flexible steering shaft of the first embodiment.
- Fig. 5: is a perspective view of the upper portion of a flexible steering shaft of the first embodiment.
- Fig. 6: is a side view, with the upper part in section, of a flexible steering shaft according to a second embodiment.

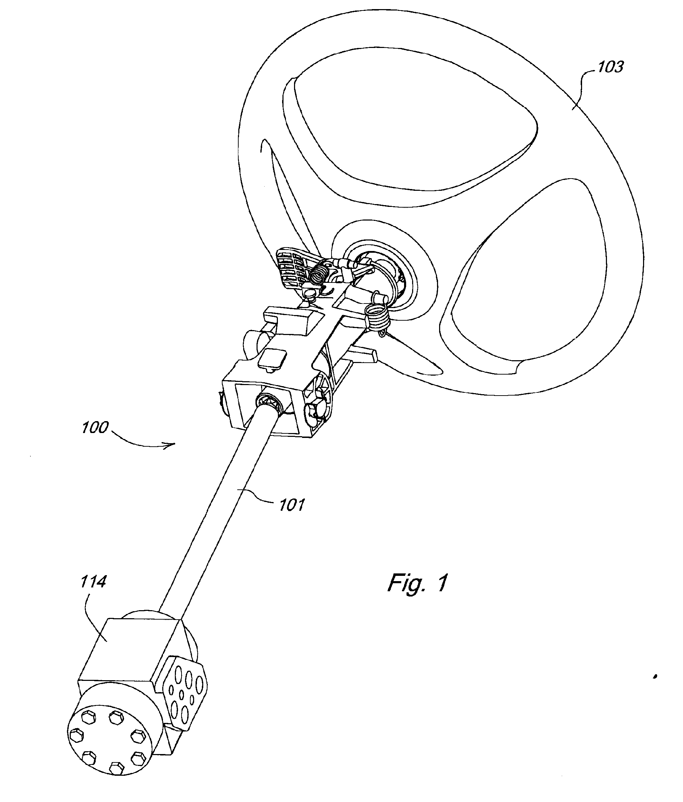

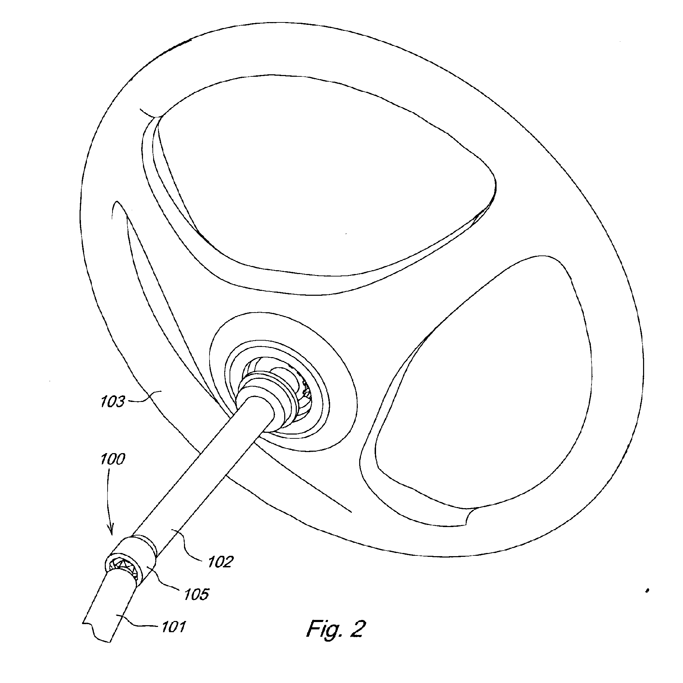

First referring to Figs. 1 and 2, a first embodiment of steering column 100 includes lower shaft 101 and upper shaft 102. The lower shaft has an axis that may be non-parallel or misaligned with the axis of the second shaft. Each of the upper and lower shafts may be steel bars or tubes having outer diameters between about 1,27 cm (½ inch) and about 3,81 cm (1½ inches).

In one embodiment, the top end of upper shaft 102 may be attached to steering wheel 103, and the bottom end of upper shaft 102 may releasably engage the top end of the lower shaft. The bottom end of the lower shaft may be operatively connected to steering control box 114 which may be attached through hydraulic or mechanical linkages, or other devices, to the steerable wheels of a tractor or other vehicle. A connection between the upper shaft and lower shaft allows flexing and relative movement between the two shafts, and transfers torque for steering the vehicle. The upper and lower shafts may be non-parallel or misaligned with respect to each other. During normal usage, the upper and lower shafts stay engaged together and allow transmission of torque even if the axis of one shaft moves or is angularly displaced with respect to the axis of the other shaft.

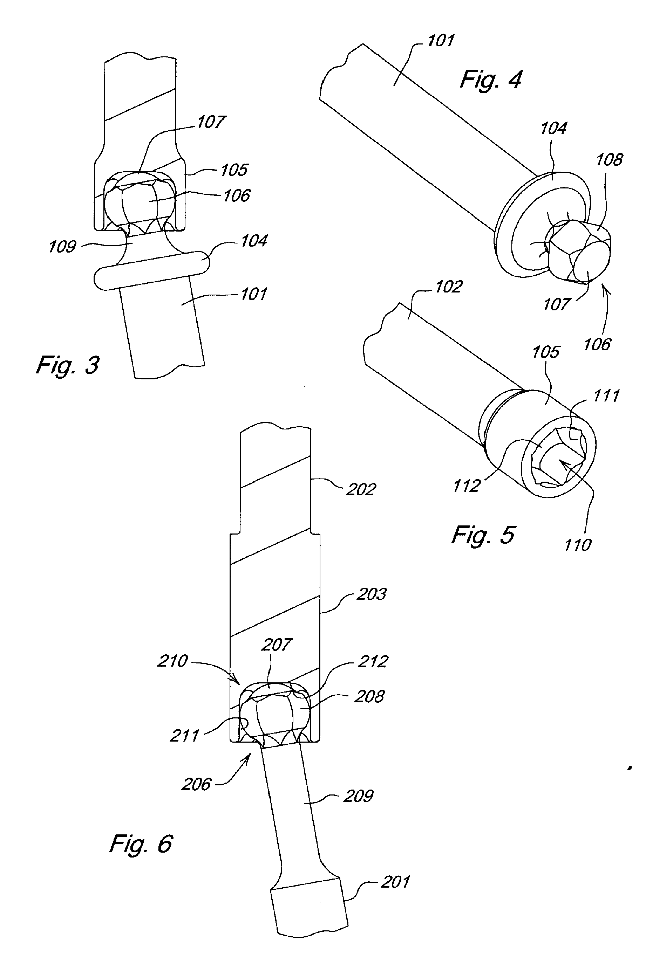

Now referring to Fig. 5, in one embodiment, upper shaft 102 may have a socket 110 in the bottom end thereof. The socket may be within an upset portion 105 of the bottom end of upper shaft 102. The socket may have a polygonal interior cross section. For example, the socket may have a hexagonal shaped interior cross section, with six interior side surfaces 111 and an interior end wall 112. In an alternative embodiment (not shown), the socket chamber may have more or less than six interior side surfaces.

As shown in Figs. 3 and 4, in one embodiment, the lower shaft has a head 106 at its top end that is dimensioned to fit in the socket in the upper shaft. The head may be polygonal in cross section, with sides 108 corresponding to the same number of sides as the socket. For example, the head of Figs. 3 and 4 has a hexagonal cross section with six sides. In other embodiments (not shown), the head may have more or less than six sides. Each of the sides has a curved profile to permit misalignment or movement of the upper shaft with respect to the lower shaft, without binding. The curved side profiles of each side of the head may conform to part of a circle or cylinder having a center along the central axis of the lower shaft.

In one embodiment, head 106 may slide into socket 110 in the upper shaft. The side surfaces 108 of the head may have profiles that are curved sufficiently, and are outwardly convex, to allow the head to pivot while remaining in the socket. As a result, the axes of the upper and lower shafts may move relative to each other, while the head remains in the socket. The head and socket connection allows torque to be transmitted between the upper and lower shafts even if they are misaligned.

Additionally, in one embodiment, the end face 107 of the head may be convex or rounded. Preferably, the side surfaces 108 may be a portion of a cylinder or circle, with centers along the central axis of the lower shaft. If not cylindrical or circular, each side may be curved sufficiently to allow the upper and lower shafts to have different axes. For example, the center of curvature of each side surface may be displaced outwardly from the longitudinal axis of the lower shaft, or the side surfaces may simply be convex.

In one embodiment, the head may extend from a narrowed neck 109. Additionally, a flange 104 may be positioned between the lower shaft 101 and the neck 109. The outer diameters of the head and neck 109 each may be smaller than the diameter of the lower shaft 101, and can be manufactured from the same bar stock.

Fig. 6 illustrates a second embodiment of the invention, in which the neck of the lower shaft and the upset portion of the upper shaft are longer than in the first embodiment. Head 206 extends from neck 209. In the embodiment of Fig. 6, lower shaft 201 may be engaged to upper shaft 202 by sliding to insert the hexagonal shaped head 206 into bore or socket 210. The hexagonal shaped socket may have six interior sides 211 and an interior end wall 212, and may be included within upset portion 203 at the bottom end of upper shaft 202. In the second embodiment, the hexagonal shaped head also may have six flat side surfaces and, optionally, may have a convex or rounded end face 207. The head and socket also may have more or less than six surfaces.

The flexible steering shaft according to the present invention may transfer torque through a steering column and accommodate misalignment between the axes of the upper and lower steering shafts. The flexible steering shaft provides a significant cost reduction because of a reduced number of parts that make up the entire assembly, when compared with alternative steering columns that include universal joints and flexible wound wire cores.

Alternatively, the upper and lower shafts may be reversed, so that the head may be connected to the upper shaft, and the socket may be in an upset portion of the lower shaft.

Having described the preferred embodiment, it will become apparent that various modifications can be made without departing from the scope of the invention as defined in the accompanying claims.

## Claims

1. A steering column (100) comprising an upper shaft (102, 202) having a top end and a bottom end, a lower shaft (101, 201) having a top end and a bottom end, **characterized in that** one of the upper and lower shafts (101, 201) having a polygonal socket (110, 210), and the other shaft (102, 202) having a polygonal and/or multi-sided head (106, 206) inserted into the socket (110, 210), the head (106, 206) having side surfaces (108, 208) that are outwardly convex in shape.

2. The steering column according to claim 1, **characterized in that** the top end of the upper shaft (102) is attached to a steering wheel (103) attached to the top end; the bottom end of the lower shaft (101) is connected to a steering control box (114).

3. The steering column according to claim 1 or 2, **characterized in that** the head (106, 206) has a convex end face (107) and/or has a flat end face (207).

4. The steering column according to one or several of the previous claims, **characterized in that** the head (106, 206) extends from a neck (109, 209) having a smaller outer diameter than the other shaft (101, 201) and/or that the outer diameter of the head (106, 206) is less than the outer diameter of the other shaft (101, 201).

5. The steering column according to one or several of the previous claims, **characterized in that** there is provided a flange (104) adjacent the head (106).

6. The steering column according to one or several of the previous claims, the upper shaft (102, 202) having a different axis of rotation than the lower shaft (101, 201).

7. The steering column according to one or several of the previous claims, **characterized in that** the head (106, 206) and socket (110, 210) are each hexagonal in cross section.

8. The steering column according to one or several of the previous claims, **characterized by** an upset (105) on the end of the upper shaft (102), the socket (110) being in the upset (105).

9. The steering column, according to one or several of the previous claims, **characterized in that** the head (106, 206) is insertable into the socket (110, 210) to impart torque between the upper and lower shafts (101, 201, 102, 202).

10. A vehicle, preferably for lawn-, yard- and grounds maintenance, **characterized by** a steering column (110) according to one or several of the previous claims.
